# EUROPÄISCHE PATENTSCHRIFT

(11) **EP 3 936 597 B1**
(45) Veröffentlichungstag und Bekanntmachung des Hinweises auf die Patenterteilung: **09.10.2024**
(21) Anmeldenummer: 20184973.4
(22) Anmeldetag: 09.07.2020
(51) Int. Cl.: C12C 13/10

(54) **ANORDNUNG UND VERFAHREN ZUM BIERBRAUEN**
ASSEMBLY AND METHOD FOR BREWING BEER
AGENCEMENT ET PROCÉDÉ DE BRASSAGE DE BIÈRE

(43) Veröffentlichungstag der Anmeldung: 12.01.2022
(73) Patentinhaber: Fiedler, Marko, 06577 An der Schmücke OT Oldisleben (DE); Denke, Lars, 06577 An der Schmücke OT Oldisleben (DE)
(72) Erfinder: Fiedler, Marko, 06577 An der Schmücke OT Oldisleben (DE); Denke, Lars, 06577 An der Schmücke OT Oldisleben (DE)
(74) Vertreter: Liedtke & Partner Patentanwälte

(56) Entgegenhaltungen:
- WO-A1-2017/153818
- DE-A1- 102006 009 612
- US-A1- 2009 285 971

## Beschreibung

Die Erfindung betrifft eine Anordnung und ein Verfahren zum Bierbrauen.

Im Stand der Technik sind Brauanlagen bekannt, mit denen unter begrenzten Platzverhältnissen, beispielsweise in Hotels, Gaststätten, Pubs, etc. Bier gebraut werden kann.

WO 2017/153818 A1 beschreibt ein kompaktes Zweibehälter-Bierbrausystem mit Behältern, die so konfiguriert sind, dass sie Maisch-, Läuter- und Siedebraustufen durchführen, die insbesondere bei Handwerksbrauereien in kleinem Maßstab, wie z. B. Kneipenbrauen, anwendbar sind. Um ein kompaktes und kosteneffizientes Brausystem bereitzustellen, das einfach, präzise und wiederholbar verwendet werden kann, um alle kritischen Aspekte des Brauvorgangs zu steuern und zu verbessern, die mit dem Brauen verbunden sind, umfasst das System ein unteres Gefäß mit einem inneren Bottich, konfiguriert zum Durchführen von Maisch- und Siedestufen, einem oberen Behälter, der über dem unteren Behälter in Fluidverbindung mit dem Bottich positioniert ist und konfiguriert ist, um Läuterstufen durchzuführen, und eine Pumpe zum Abführen von Flüssigkeit dem Bottich zu dem oberen Gefäß. Vorzugsweise ist/sind zumindest der untere Bottich und/oder das obere Gefäß im Wesentlichen zylindrisch, der Durchmesser des oberen Gefäßes ist kleiner als der Durchmesser des unteren Bottichs und das untere Gefäß wird exzentrisch über dem unteren Bottich platziert.

DE 10 2006 009612 A1 beschreibt eine Kleinbrauanlage und ein Verfahren, die das einfache und präzise Erwärmen und/oder Kochen von Maische und/oder Würze auch für den Laien ermöglichen. Die Anlage hierfür besteht im Wesentlichen aus einer Pfanne zur Maischeerhitzung und Würzekochung, einem Läuterbottich und einem oder mehreren Strahlungsheizkörpern, die unter der Pfanne angeordnet sind und eine präzise Temperatur- und Zeitsteuerung von Maische und Würze gewährleisten. Um Abstrahlverluste zu vermeiden, ist die Pfannenaußenseite darüber hinaus an ihrer Unterseite mit einer speziellen Beschichtung versehen. Des Weiteren sind der Kleinbrauanlage ein Wasserzulauf sowie ein Würzezulauf und ein Würzeablauf, ein Rührwerk, ein Abzug und ein Hopfengeber zugeordnet. Durch eine integrierte Steuerung können die einzelnen Funktionen Wasserzufuhr, Heizung, Hopfenzugabe, Leerung der Pfanne, Einsatz des Rührwerks und/oder Umpumpen der Würze in die Pfanne nach dem Läutervorgang programmgesteuert oder manuell gesteuert werden, wobei der Fortschritt der einzelnen Verfahrensschritte sowie die Ist- und Sollzustände der gesteuerten Größen Temperatur, Zeit und Füllstand der Pfanne an einem Bildschirm angezeigt werden.

Der Erfindung liegt die Aufgabe zu Grunde, eine verbesserte Anordnung und ein verbessertes Verfahren zum Bierbrauen anzugeben.

Die Aufgabe wird erfindungsgemäß gelöst durch eine Anordnung mit den Merkmalen des Anspruchs 1 und durch ein Verfahren mit den Merkmalen des Anspruchs 8.

Vorteilhafte Ausgestaltungen der Erfindung sind Gegenstand der Unteransprüche.

Eine erfindungsgemäße Anordnung zum Bierbrauen umfasst zumindest einen ersten Behälter und einen zweiten Behälter, wobei jeder Behälter zumindest einen ersten Abgang unterhalb eines Sitzes für ein entnehmbares Läutersieb und einen zweiten Abgang oberhalb des Sitzes für das Läutersieb aufweist, wobei jeder Behälter beheizbar gestaltet ist, wobei die Anordnung ferner mindestens eine Pumpe umfasst, die über entsprechende Saugleitungen und ein oder mehrere Absperrorgane wahlweise mit dem ersten Abgang des ersten Behälters und/oder dem ersten Abgang des zweiten Behälters verbunden oder verbindbar ist, wobei die mindestens eine Pumpe über entsprechende Druckleitungen und ein oder mehrere Absperrorgane wahlweise mit dem zweiten Abgang des ersten Behälters und/oder mit dem zweiten Abgang des zweiten Behälters verbunden oder verbindbar ist, derart, dass mittels der mindestens einen Pumpe Flüssigkeit im ersten Behälter und/oder im zweiten Behälter umwälzbar oder von einem der Behälter in den anderen der Behälter pumpbar ist.

Die Absperrorgane können als Absperrschieber, Absperrklappen, Absperrhähne oder Ventile (beispielsweise Dreiwegeventile) und zur manuellen oder automatischen Betätigung ausgebildet sein.

In einer Ausführungsform umfasst die Anordnung eine erste Pumpe und eine zweite Pumpe, wobei die erste Pumpe über eine Saugleitung und ein oder mehrere Absperrorgane mit dem ersten Abgang des ersten Behälters verbunden oder verbindbar ist, wobei die erste Pumpe über eine Druckleitung und mindestens ein Absperrorgan wahlweise mit dem zweiten Abgang des ersten Behälters und/oder mit dem zweiten Abgang des zweiten Behälters verbunden oder verbindbar ist, derart, dass mittels der ersten Pumpe Flüssigkeit im ersten Behälter umwälzbar oder aus dem zweiten Behälter in den ersten Behälter pumpbar ist, wobei die zweite Pumpe über eine Saugleitung und ein oder mehrere Absperrorgane mit dem ersten Abgang des zweiten Behälters verbunden oder verbindbar ist, wobei die zweite Pumpe über eine Druckleitung und mindestens ein Absperrorgan wahlweise mit dem zweiten Abgang des zweiten Behälters und/oder mit dem zweiten Abgang des ersten Behälters verbunden oder verbindbar ist, derart, dass mittels der zweiten Pumpe Flüssigkeit im zweiten Behälter umwälzbar oder aus dem ersten Behälter in den zweiten Behälter pumpbar ist.

Die erfindungsgemäße Anordnung zum Bierbrauen ermöglicht, dass in jedem der beiden Braubehälter jeder Schritt eines Brauprozesses, insbesondere Maischen, Läutern und Hopfenkochen, durchgeführt werden kann. Dies ermöglicht insbesondere, dass zwei Brauprozesse überlappend stattfinden können. Auf diese Weise kann bei beschränktem Raumangebot ein erhöhter Durchsatz der Anordnung zum Bierbrauen erzielt werden.

Die beiden Behälter sind vorzugsweise identisch ausgebildet und/oder ausgestattet.

In einer Ausführungsform ist der erste Abgang an einem tiefsten Punkt des jeweiligen Behälters angeordnet.

In einer Ausführungsform weist jeder Behälter einen dritten Abgang oberhalb des tiefsten Punktes aber unterhalb des Sitzes für das Läutersieb auf, wobei der dritte Abgang des ersten Behälters über eine weitere Saugleitung mit der ersten Pumpe verbunden oder verbindbar ist und wobei der dritte Abgang des zweiten Behälters über eine weitere Saugleitung mit der zweiten Pumpe verbunden oder verbindbar ist. Auf diese Weise kann beim Abpumpen der gehopften Würze aus dem Behälter ein gegebenenfalls vorhandener Bodensatz im Behälter verbleiben und gelangt nicht in den Gärbehälter, sodass der Filtrationsaufwand sich verringert.

In einer Ausführungsform ist zur Verbindung der ersten Pumpe und/oder zweiten Pumpe mit dem dritten Abgang des jeweiligen Behälters mindestens ein weiteres Absperrorgan vorgesehen.

In einer Ausführungsform ist ferner ein Absperrorgan vorgesehen, über das mit der mindestens einen Pumpe, beispielsweise mit der ersten Pumpe, Flüssigkeit aus dem ersten Behälter in einen Gärbehälter pumpbar ist und/oder über das mit der mindestens einen Pumpe, beispielsweise mit der zweiten Pumpe, Flüssigkeit aus dem zweiten Behälter in einen Gärbehälter pumpbar ist.

In einer Ausführungsform sind die Behälter jeweils mit einem Temperaturfühler versehen und mittels einer Heizung beheizbar.

In einer Ausführungsform ist eine elektronische Steuerung und/oder mindestens ein Thermostat vorgesehen, die oder der zum Überwachen der Temperatur mittels der Temperaturfühler sowie zum Steuern und/oder Regeln der Heizung und der Pumpen ausgebildet ist.

In einer Ausführungsform ist ein Wärmetauscher zum Kühlen von zum Gärtank gepumpter Flüssigkeit vorgesehen.

Ein erfindungsgemäßes Verfahren zum Bierbrauen wird unter Verwendung der oben beschriebenen Anordnung durchgeführt, wobei im ersten Behälter gemaischt wird, während gleichzeitig im zweiten Behälter Hopfenkochen erfolgt, wobei nach dem Hopfenkochen Würze aus dem zweiten Behälter in einen Gärtank gepumpt, der nunmehr leere zweite Behälter gereinigt und ein Läutersieb in den zweiten Behälter eingesetzt wird, wobei anschließend Maische aus dem ersten Behälter in den zweiten Behälter gepumpt und dort geläutert wird, wobei anschließend beim Läutern entstehende Würze in den ersten Behälter gepumpt und dort das Hopfenkochen durchgeführt wird, während der nunmehr leere zweite Behälter gereinigt, das Läutersieb entfernt und anschließend im zweiten Behälter gemaischt wird.

Vorzugsweise kann das Verfahren alternierend zwischen dem ersten Behälter und dem zweiten Behälter einmal oder mehrmals wiederholt werden. Auf diese Weise können jeweils zwei Brauprozesse zeitlich überlappend durchgeführt werden.

In einer Ausführungsform wird die Maische während des Maischens mit der dem jeweiligen Behälter zugeordneten Pumpe umgewälzt.

Ausführungsbeispiele der Erfindung werden im Folgenden anhand von Zeichnungen näher erläutert.

Darin zeigen:
- Figur 1: eine schematische Ansicht einer Anordnung zum Bierbrauen, und
- Figur 2: eine schematische Ansicht einer weiteren Ausführungsform einer Anordnung zum Bierbrauen.

Einander entsprechende Teile sind in allen Figuren mit den gleichen Bezugszeichen versehen.

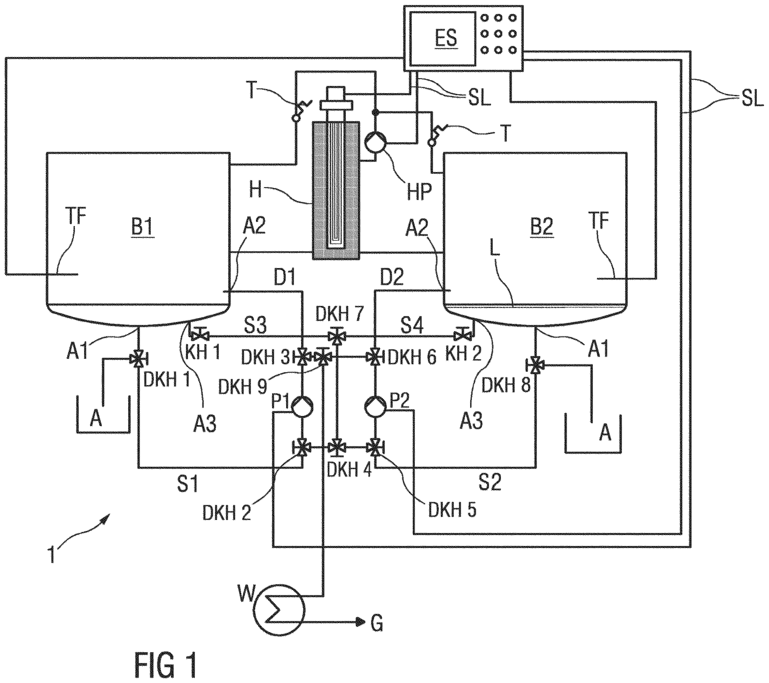

**Figur 1** zeigt eine schematische Ansicht einer Anordnung 1 zum Bierbrauen, umfassend einen ersten Behälter B1 und einen zweiten Behälter B2.

Ein wechselbares Läutersieb L ist in der Abbildung im zweiten Behälter B2 eingelegt, kann jedoch entnommen und stattdessen in den ersten Behälter B 1 eingelegt werden. Alternativ können auch zwei Läutersiebe L im Lieferumfang der Anordnung 1 vorgesehen sein.

Jeder der Behälter B 1, B2 weist zumindest einen ersten Abgang A1 an einem tiefsten Punkt des Behälters B1, B2 unterhalb eines Sitzes für das Läutersieb L und einen zweiten Abgang A2 oberhalb des Sitzes für das Läutersieb L auf. Ein dritter Abgang A3 kann oberhalb des tiefsten Punktes aber unterhalb des Sitzes für das Läutersieb L vorgesehen sein.

Jeder der Behälter B1, B2 ist beheizbar gestaltet und kann hierfür Anschlüsse für einen Heizkreislauf aufweisen. Ferner ist in oder an jedem der Behälter B 1, B2 ein Temperaturfühler TF vorgesehen.

Die Anordnung 1 umfasst ferner eine erste Pumpe P1, die über entsprechende Saugleitungen S1, S2 und Absperrorgane DKH1, DKH2, DKH4, DKH5, DKH8, beispielsweise Absperrschieber oder Dreiwegeventile, wahlweise mit dem ersten Abgang A1 des ersten Behälters B1 und dem ersten Abgang A1 des zweiten Behälters B2 verbunden oder verbindbar ist, und die über eine Druckleitung D1 und ein Absperrorgan DKH 3 wahlweise mit dem zweiten Abgang A2 des ersten Behälters B1 verbunden oder verbindbar ist, derart, dass mittels der ersten Pumpe P1 Flüssigkeit im ersten Behälter B1 umgewälzt oder aus dem zweiten Behälter B2 in den ersten Behälter B1 gepumpt werden kann. Ferner ist ein Absperrorgan DKH9 vorgesehen, über das mit der ersten Pumpe P1 Flüssigkeit aus dem ersten Behälter B1 in einen Gärbehälter G gepumpt werden kann. Die erste Pumpe P1 kann hierfür die Flüssigkeit über die Saugleitung S1 aus dem ersten Abgang A1 oder über eine Saugleitung S3 aus dem dritten Abgang A3 des ersten Behälters B1 entnehmen, wofür weitere Absperrorgane DKH7 und DKH4 sowie ein Absperrorgan KH1 vorgesehen sein können.

Die Anordnung 1 umfasst ferner eine zweite Pumpe P2, die über entsprechende Saugleitungen S1, S2 und Absperrorgane DKH1, DKH2, DKH4, DKH5, DKH8 wahlweise mit dem ersten Abgang A1 des ersten Behälters B1 und dem ersten Abgang A1 des zweiten Behälters B2 verbunden oder verbindbar ist, und die über eine Druckleitung D2 und ein Absperrorgan DKH6 wahlweise mit dem zweiten Abgang A2 des zweiten Behälters B2 verbunden oder verbindbar ist, derart, dass mittels der zweiten Pumpe P2 Flüssigkeit im zweiten Behälter B2 umgewälzt oder aus dem ersten Behälter B1 in den zweiten Behälter B2 gepumpt werden kann. Ferner kann über das Absperrorgan DKH9 mit der zweiten Pumpe P2 Flüssigkeit aus dem zweiten Behälter B2 in einen Gärbehälter G gepumpt werden. Die zweite Pumpe P2 kann hierfür die Flüssigkeit über die Saugleitung S2 aus dem ersten Abgang A1 oder über eine Saugleitung S4 aus dem dritten Abgang A3 des zweiten Behälters B2 entnehmen, wofür die weiteren Absperrorgane DKH7 und DKH4 sowie ein Absperrorgan KH2 verwendet werden können.

Die Anordnung 1 kann zur Durchführung des nachfolgend beschriebenen Verfahrens zum Bierbrauen verwendet werden.

Im ersten Behälter B1 findet das Maischen statt, wie aus dem Stand der Technik bekannt. Dabei wird Wasser eingefüllt, erwärmt, und Malz zugegeben. Beim Maischen sind unterschiedliche Rastzeiten und Temperaturen einzuhalten. Zwischendurch und während der Aufheizphasen wird die Maische mit der ersten Pumpe P1 über die Saugleitung S1 und die Druckleitung D1 umgewälzt. Hierzu werden die Absperrorgane DKH1, DKH2 und DKH3 entsprechend gestellt, im Ausführungsbeispiel auf geraden Durchlass.

Der zweite Behälter B2 ist währenddessen leer. Das wechselbare Läutersieb L kann bereits in den zweiten Behälter B2 eingelegt sein.

Nach dem Rastende beim Maischen wird der komplette Inhalt des ersten Behälters B1 mit der zweiten Pumpe P2 über die Saugleitung S1 und die Druckleitung D2 in den zweiten Behälter B2 gepumpt, in dem das Läutersieb L eingelegt ist oder wird. Hierzu werden die Absperrorgane DKH1, DKH2, DKH4, DKH5, DKH6 entsprechend gestellt, im Ausführungsbeispiel stehen die Absperrorgane DKH1, DKH4 und DKH6 auf geradem Durchlass und die Absperrorgane DKH2 und DKH5 auf Durchlass über Eck.

Der erste Behälter B 1 kann währenddessen und/oder anschließend mit etwas Wasser, insbesondere vorgewärmtem Wasser, gespült werden.

Der erste Behälter B 1 ist nunmehr leer. Im zweiten Behälter B2 wird der Prozess des Läuterns gestartet. Dabei wird die Flüssigkeit durch das Läutersieb L in Würze und Treber getrennt, wobei die Würze wieder in den ersten Behälter B 1 zurückgepumpt wird. Vorgewärmtes Nachgusswasser wird über den verbleibenden Treber gegossen und anschließend wie die Würze in den ersten Behälter B 1 gepumpt. Das Pumpen erfolgt mit der ersten Pumpe P1 über die Saugleitung S2 und die Druckleitung D1. Hierzu werden die Absperrorgane DKH2, DKH3, DKH4, DKH5, DKH8 entsprechend gestellt, im Ausführungsbeispiel stehen die Absperrorgane DKH3, DKH4 und DKH8 auf geradem Durchlass und die Absperrorgane DKH2 und DKH5 auf Durchlass über Eck.

Anschließend wird im ersten Behälter B 1 die Würze zum Kochen gebracht und Hopfen zugegeben. Dieser Schritt wird auch als Hopfenkochen bezeichnet. Aus dem nunmehr leeren zweiten Behälter B2 werden verbliebene Abfallprodukte (Treber) entfernt und der zweite Behälter B2 wird gereinigt. Hierzu kann das Läutersieb L entnommen werden. Das beim Reinigen anfallende Schmutzwasser kann über das Absperrorgan DKH8 einem Abfluss A zugeleitet werden.

Im ersten Behälter B 1 kocht nunmehr die Würze und im gereinigten zweiten Behälter B2 kann der nächste Sud mit dem Maischen begonnen werden. Der Prozess beginnt somit von vorn. Dabei wird Wasser eingefüllt, erwärmt, und Malz zugegeben. Beim Maischen sind unterschiedliche Rastzeiten und Temperaturen einzuhalten. Zwischendurch und während der Aufheizphasen wird die Maische mit der zweiten Pumpe P2 über die Saugleitung S2 und die Druckleitung D2 umgewälzt. Hierzu werden die Absperrorgane DKH5, DKH6 und DKH8 entsprechend gestellt, im Ausführungsbeispiel auf geraden Durchlass.

Nach dem Hopfenkochen im ersten Behälter B 1 wird die Würze über die Saugleitung S3 mittels der ersten Pumpe P1 durch den Wärmetauscher W zum Abkühlen in einen Gärtank G zur Hauptgärung gepumpt. Hierzu werden die Absperrorgane DKH7, DKH4, DKH2, DKH3, DKH9 und das Absperrorgan KH1 entsprechend gestellt, im Ausführungsbeispiel wird das Absperrorgan KH1 geöffnet, die Absperrorgane DKH7, DKH4, DKH2, DKH3, DKH9 stehen auf Durchlass über Eck.

Sobald der erste Behälter B 1 leer ist, kann er gegebenenfalls gereinigt und das Läutersieb L eingesetzt werden. Beim Reinigen anfallendes Schmutzwasser kann über das Absperrorgan DKH1 einem Abfluss A zugeleitet werden.

Nach dem Rastende beim Maischen im zweiten Behälter B2 wird der komplette Inhalt des zweiten Behälters B2 mit der ersten Pumpe P1 über die Saugleitung S2 und die Druckleitung D1 in den ersten Behälter B 1 gepumpt, in dem das Läutersieb L eingelegt ist oder wird. Hierzu werden die Absperrorgane DKH2, DKH3, DKH4, DKH5, DKH8 entsprechend gestellt, im Ausführungsbeispiel stehen die Absperrorgane DKH3, DKH 4 und DKH8 auf geradem Durchlass und die Absperrorgane DKH2 und DKH 5 auf Durchlass über Eck.

Der zweite Behälter B2 ist nunmehr leer. Im ersten Behälter B 1 wird der Prozess des Läuterns gestartet. Dabei wird die Flüssigkeit durch das Läutersieb L in Würze und Treber getrennt, wobei die Würze wieder in den zweiten Behälter B2 zurückgepumpt wird. Vorgewärmtes Nachgusswasser wird über den verbleibenden Treber gegossen und anschließend wie die Würze in den zweiten Behälter B2 gepumpt. Das Pumpen erfolgt mit der zweiten Pumpe P2 über die Saugleitung S1 und die Druckleitung D2. Hierzu werden die Absperrorgane DKH1, DKH2, DKH4, DKH5, DKH6 entsprechend gestellt, im Ausführungsbeispiel stehen die Absperrorgane DKH1, DKH4 und DKH6 auf geradem Durchlass und die Absperrorgane DKH2 und DKH5 auf Durchlass über Eck.

Anschließend wird im zweiten Behälter B2 die Würze zum Kochen gebracht und Hopfen zugegeben. Dieser Schritt wird auch als Hopfenkochen bezeichnet. Aus dem nunmehr leeren ersten Behälter B 1 werden verbliebene Abfallprodukte (Treber) entfernt und der erste Behälter B 1 wird gereinigt. Hierzu kann das Läutersieb L entnommen werden.

Im zweiten Behälter B2 kocht nunmehr die Würze und im gereinigten ersten Behälter B 1 kann der nächste Sud mit dem Maischen begonnen werden wie oben beschrieben.

Nach dem Hopfenkochen im zweiten Behälter B2 wird die Würze über die Saugleitung S4 mittels der zweiten Pumpe P2 durch den Wärmetauscher W zum Abkühlen in einen Gärtank G zur Hauptgärung gepumpt. Hierzu werden die Absperrorgane DKH7, DKH4, DKH5, DKH6, DKH9 und das Absperrorgan KH2 entsprechend gestellt, im Ausführungsbeispiel wird das Absperrorgan KH1 geöffnet, die Absperrorgane DKH7, DKH4, DKH5, DKH6, DKH9 stehen auf Durchlass über Eck.

Sobald der zweite Behälter B2 leer ist, kann er gegebenenfalls gereinigt und das Läutersieb L eingesetzt werden.

In einer bevorzugten Ausführungsform sind beide Behälter B1, B2 identisch ausgebildet und/oder ausgestattet.

Die Behälter B1, B2 können mit heißem Öl oder einem anderen Medium beheizt werden, das beispielsweise in einer Heizung H erwärmt und mittels einer Heizungspumpe HP zirkuliert wird. Es kann eine elektronische Steuerung ES vorgesehen sein, die die Heizung H, die Heizungspumpe HP und die Pumpen P1, P2 über Steuerleitungen SL steuert und die über Temperaturfühler TF in den Behältern B 1, B2 deren Temperatur überwacht. Ferner können Thermostate T vorgesehen sein, um die erforderlichen Temperaturen beim Brauen einzuhalten.

Das Nachgusswasser, beispielsweise Leitungswasser, kann über einen Wärmetauscher, der mit dem heißen Öl oder Medium beheizt wird, auf die entsprechende Temperatur erwärmt werden (Prinzip Durchlauferhitzer) oder es ist ein Heißwasseranschluss vorhanden, dessen Warmwasser direkt für den Nachguss verwendet werden kann.

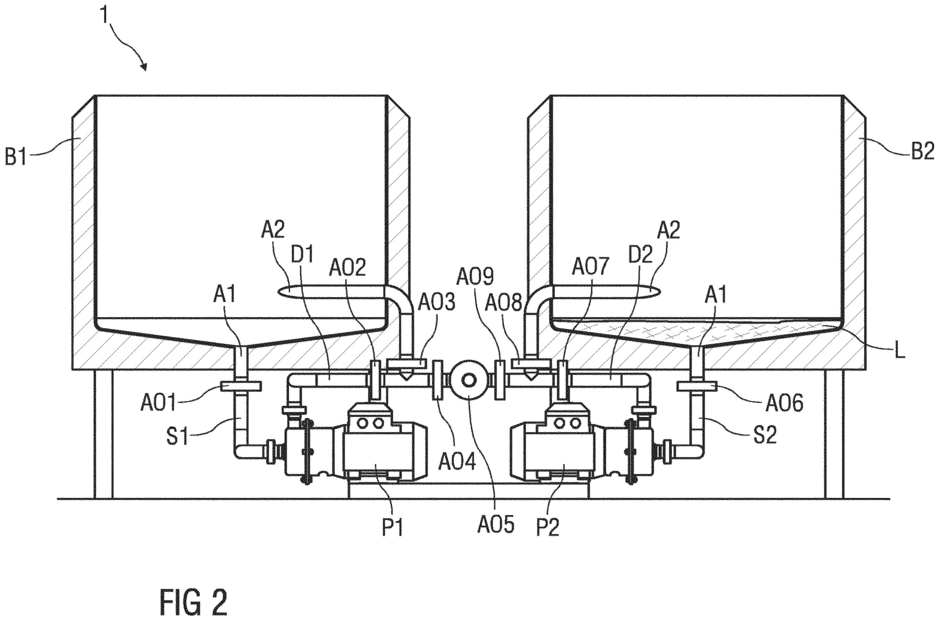

**Figur** 2 zeigt eine schematische Ansicht einer weiteren Ausführungsform einer Anordnung 1 zum Bierbrauen, umfassend einen ersten Behälter B1 und einen zweiten Behälter B2.

Ein wechselbares Läutersieb L ist in der Abbildung im zweiten Behälter B2 eingelegt, kann jedoch entnommen und stattdessen in den ersten Behälter B 1 eingelegt werden. Alternativ können auch zwei Läutersiebe L im Lieferumfang der Anordnung 1 vorgesehen sein.

Jeder der Behälter B 1, B2 weist zumindest einen ersten Abgang A1 an einem tiefsten Punkt des Behälters B1, B2 unterhalb eines Sitzes für das Läutersieb L und einen zweiten Abgang A2 oberhalb des Sitzes für das Läutersieb L auf. Ein dritter Abgang kann oberhalb des tiefsten Punktes aber unterhalb des Sitzes für das Läutersieb L vorgesehen sein.

Jeder der Behälter B1, B2 ist beheizbar gestaltet und kann hierfür Anschlüsse für einen Heizkreislauf aufweisen. Ferner kann in oder an jedem der Behälter B 1, B2 ein Temperaturfühler vorgesehen sein (nicht dargestellt).

Die Anordnung 1 umfasst ferner eine erste Pumpe P1, die über eine Saugleitung S1 und ein Absperrorgan AO1, beispielsweise Absperrschieber oder Dreiwegeventile, wahlweise mit dem ersten Abgang A1 des ersten Behälters B1 verbunden oder verbindbar ist, und die über eine Druckleitung D1 und mindestens ein Absperrorgan AO2, AO3 wahlweise mit dem zweiten Abgang A2 des ersten Behälters B1 verbunden oder verbindbar ist, derart, dass mittels der ersten Pumpe P1 Flüssigkeit im ersten Behälter B1 umgewälzt werden kann. Ferner ist ein Absperrorgan AO5 vorgesehen, über das mit der ersten Pumpe P1 Flüssigkeit aus dem ersten Behälter B1 in einen Gärbehälter (nicht dargestellt) gepumpt werden kann.

Die Anordnung 1 umfasst ferner eine zweite Pumpe P2, die über eine Saugleitung S2 und ein Absperrorgan AO6 wahlweise mit dem ersten Abgang A1 des zweiten Behälters B2 verbunden oder verbindbar ist, und die über eine Druckleitung D2 und mindestens ein Absperrorgan AO7 wahlweise mit dem zweiten Abgang A2 des zweiten Behälters B2 verbunden oder verbindbar ist, derart, dass mittels der zweiten Pumpe P2 Flüssigkeit im zweiten Behälter B2 umgewälzt werden kann. Die Druckleitungen D1, D2 sind untereinander über die Absperrorgane AO2, AO7 und gegebenenfalls weitere Absperrorgane AO4, AO9 verbunden, so dass bei entsprechender Stellung der Absperrorgane AO1 bis AO9 von der ersten Pumpe P1 Flüssigkeit aus dem ersten Behälter B1 in den zweiten Behälter B2 oder von der zweiten Pumpe P2 aus dem zweiten Behälter B2 in den ersten Behälter B1 gepumpt werden kann. Ferner kann über das Absperrorgan AO5 mit der zweiten Pumpe P2 Flüssigkeit aus dem zweiten Behälter B2 in einen Gärbehälter G gepumpt werden.

Die Absperrorgane AO2, AO3, AO4 können alternativ zu einem Dreiwegeventil zusammengefasst sein. Die Absperrorgane AO7, AO8, AO9 können alternativ zu einem Dreiwegeventil zusammengefasst sein.

Die Anordnung 1 kann zur Durchführung des nachfolgend beschriebenen Verfahrens zum Bierbrauen verwendet werden.

Im ersten Behälter B1 findet das Maischen statt, wie aus dem Stand der Technik bekannt. Dabei wird Wasser eingefüllt, erwärmt, und Malz zugegeben. Beim Maischen sind unterschiedliche Rastzeiten und Temperaturen einzuhalten. Zwischendurch und während der Aufheizphasen wird die Maische mit der ersten Pumpe P1 über die Saugleitung S1 und die Druckleitung D1 umgewälzt. Hierzu werden die Absperrorgane AO1, AO2, AO3 geöffnet und das Absperrorgan AO4 wird oder bleibt geschlossen.

Der zweite Behälter B2 ist währenddessen leer. Das wechselbare Läutersieb L kann bereits in den zweiten Behälter B2 eingelegt sein.

Nach dem Rastende beim Maischen wird der komplette Inhalt des ersten Behälters B1 mit der ersten Pumpe P1 über die Saugleitung S1 und die Druckleitung D1 in den zweiten Behälter B2 gepumpt, in dem das Läutersieb L eingelegt ist oder wird. Hierzu werden oder bleiben die Absperrorgane AO1, AO2, AO4, AO9, AO8 geöffnet und die Absperrorgane AO3, AO5, AO7 werden oder bleiben geschlossen.

Der erste Behälter B1 kann währenddessen und/oder anschließend mit etwas Wasser, insbesondere vorgewärmtem Wasser, gespült werden.

Der erste Behälter B1 ist nunmehr leer. Im zweiten Behälter B2 wird der Prozess des Läuterns gestartet. Dabei wird die Flüssigkeit durch das Läutersieb L in Würze und Treber getrennt, wobei die Würze wieder in den ersten Behälter B1 zurückgepumpt wird. Vorgewärmtes Nachgusswasser wird über den verbleibenden Treber gegossen und anschließend wie die Würze in den ersten Behälter B1 gepumpt. Das Pumpen erfolgt mit der zweiten Pumpe P2 über die Saugleitung S2 und die Druckleitung D2. Hierzu werden oder bleiben die Absperrorgane AO6, AO7, AO9, ACH, AO3 geöffnet und die Absperrorgane AO8, AO5, AO2 werden oder bleiben geschlossen.

Anschließend wird im ersten Behälter B1 die Würze zum Kochen gebracht und Hopfen zugegeben. Dieser Schritt wird auch als Hopfenkochen bezeichnet. Aus dem nunmehr leeren zweiten Behälter B2 werden verbliebene Abfallprodukte (Treber) entfernt und der zweite Behälter B2 wird gereinigt. Hierzu kann das Läutersieb L entnommen werden. Das beim Reinigen anfallende Schmutzwasser kann einem Abfluss (nicht dargestellt) zugeleitet werden, beispielsweise über einen tiefsten Punkt im Pumpengehäuse der zweiten Pumpe P2.

Im ersten Behälter B1 kocht nunmehr die Würze und im gereinigten zweiten Behälter B2 kann der nächste Sud mit dem Maischen begonnen werden. Der Prozess beginnt somit von vorn. Dabei wird Wasser eingefüllt, erwärmt, und Malz zugegeben. Beim Maischen sind unterschiedliche Rastzeiten und Temperaturen einzuhalten. Zwischendurch und während der Aufheizphasen wird die Maische mit der zweiten Pumpe P2 über die Saugleitung S2 und die Druckleitung D2 umgewälzt. Hierzu werden oder bleiben die Absperrorgane AO6, AO7, AO8 geöffnet und das Absperrorgan AO9 wird oder bleibt geschlossen.

Nach dem Hopfenkochen im ersten Behälter B1 wird die Würze über die Saugleitung S1 mittels der ersten Pumpe P1 durch den Wärmetauscher (nichtdargestellt) zum Abkühlen in einen Gärtank (nicht dargestellt) zur Hauptgärung gepumpt. Hierzu werden oder bleiben die Absperrorgane AO1, AO2, AO4, AO5 geöffnet und die Absperrorgane AO3 und AO9 werden oder bleiben geschlossen.

Sobald der erste Behälter B1 leer ist, kann er gegebenenfalls gereinigt und das Läutersieb L eingesetzt werden. Beim Reinigen anfallendes Schmutzwasser kann einem Abfluss (nicht dargestellt) zugeleitet werden, beispielsweise über einen tiefsten Punkt im Pumpengehäuse der ersten Pumpe P1.

Nach dem Rastende beim Maischen im zweiten Behälter B2 wird der komplette Inhalt des zweiten Behälters B2 mit der zweiten Pumpe P2 über die Saugleitung S2 und die Druckleitung D2 in den ersten Behälter B1 gepumpt, in dem das Läutersieb L eingelegt ist oder wird. Hierzu werden oder bleiben die Absperrorgane AO1, AO7, AO9, ACH, AO3 geöffnet und die Absperrorgane AO8, AO5, AO2 werden oder bleiben geschlossen.

Der zweite Behälter B2 ist nunmehr leer. Im ersten Behälter B1 wird der Prozess des Läuterns gestartet. Dabei wird die Flüssigkeit durch das Läutersieb L in Würze und Treber getrennt, wobei die Würze wieder in den zweiten Behälter B2 zurückgepumpt wird. Vorgewärmtes Nachgusswasser wird über den verbleibenden Treber gegossen und anschließend wie die Würze in den zweiten Behälter B2 gepumpt. Das Pumpen erfolgt mit der ersten Pumpe P1 über die Saugleitung S1 und die Druckleitung D 1. Hierzu werden oder bleiben die Absperrorgane AO1, AO2, ACH, AO9, AO8 geöffnet und die Absperrorgane AO3, AO5, AO7 werden oder bleiben geschlossen.

Anschließend wird im zweiten Behälter B2 die Würze zum Kochen gebracht und Hopfen zugegeben. Dieser Schritt wird auch als Hopfenkochen bezeichnet. Aus dem nunmehr leeren ersten Behälter B1 werden verbliebene Abfallprodukte (Treber) entfernt und der erste Behälter B1 wird gereinigt. Hierzu kann das Läutersieb L entnommen werden.

Im zweiten Behälter B2 kocht nunmehr die Würze und im gereinigten ersten Behälter B1 kann der nächste Sud mit dem Maischen begonnen werden wie oben beschrieben.

Nach dem Hopfenkochen im zweiten Behälter B2 wird die Würze über die Saugleitung S2 mittels der zweiten Pumpe P2 durch den Wärmetauscher (nicht dargestellt) zum Abkühlen in einen Gärtank (nicht dargestellt) zur Hauptgärung gepumpt. Hierzu werden oder bleiben die Absperrorgane AO6, AO7, AO9, AO5 geöffnet und die Absperrorgane AO8, AO4 werden oder bleiben geschlossen.

Sobald der zweite Behälter B2 leer ist, kann er gegebenenfalls gereinigt und das Läutersieb L eingesetzt werden.

In einer bevorzugten Ausführungsform sind beide Behälter B1, B2 identisch ausgebildet und/oder ausgestattet.

In ähnlicher Weise wie im Ausführungsbeispiel gemäß Figur 1 können die Behälter B1, B2 mit heißem Öl oder einem anderen Medium beheizt werden, das beispielsweise in einer Heizung erwärmt und mittels einer Heizungspumpe zirkuliert wird. Es kann eine elektronische Steuerung vorgesehen sein, die die Heizung, die Heizungspumpe und die Pumpen P1, P2 über Steuerleitungen steuert und die über Temperaturfühler in den Behältern B1, B2 deren Temperatur überwacht. Ferner können Thermostate vorgesehen sein, um die erforderlichen Temperaturen beim Brauen einzuhalten.

Das Nachgusswasser, beispielsweise Leitungswasser, kann über einen Wärmetauscher, der mit dem heißen Öl oder Medium beheizt wird, auf die entsprechende Temperatur erwärmt werden (Prinzip Durchlauferhitzer) oder es ist ein Heißwasseranschluss vorhanden, dessen Warmwasser direkt für den Nachguss verwendet werden kann.

### BEZUGSZEICHENLISTE

- 1: Anordnung zum Bierbrauen
- A: Abfluss
- A1: erster Abgang
- A2: zweiter Abgang
- A3: dritter Abgang
- AO1 bis AO9: Absperrorgan
- B1: erster Behälter
- B2: zweiter Behälter
- DKH1 bis DKH9: Absperrorgan
- D1, D2: Druckleitung
- ES: elektronische Steuerung
- G: Gärtank
- H: Heizung
- HP: Heizungspumpe
- KH1, KH2: Absperrorgan
- L: Läutersieb
- P1: erste Pumpe
- P2: zweite Pumpe
- SL: Steuerleitung
- S1, S2, S3, S4: Saugleitung
- T: Thermostat
- TF: Temperaturfühler
- W: Wärmetauscher

## Patentansprüche

1. Anordnung (1) zum Bierbrauen, umfassend zumindest einen ersten Behälter (B1) und einen zweiten Behälter (B2), wobei jeder Behälter (B1, B2) zumindest einen ersten Abgang (A1) unterhalb eines Sitzes für ein entnehmbares Läutersieb (L) und einen zweiten Abgang (A2) oberhalb des Sitzes für das Läutersieb (L) aufweist, wobei jeder Behälter (B1, B2) beheizbar gestaltet ist, wobei die Anordnung (1) ferner mindestens eine Pumpe (P1, P2) umfasst, die über entsprechende Saugleitungen (S1, S2) und ein oder mehrere Absperrorgane (DKH1, DKH2, DKH4, DKH5, DKH8, AO1, AO6) wahlweise mit dem ersten Abgang (A1) des ersten Behälters (B1) und/oder dem ersten Abgang (A1) des zweiten Behälters (B2) verbunden oder verbindbar ist, wobei die mindestens eine Pumpe (P1, P2) über entsprechende Druckleitungen (D1, D2) und ein oder mehrere Absperrorgane (DKH3, AO2, AO3, AO4, AO7, AO8, AO9) wahlweise mit dem zweiten Abgang (A2) des ersten Behälters (B1) und/oder mit dem zweiten Abgang (A2) des zweiten Behälters (B2) verbunden oder verbindbar ist, derart, dass mittels der mindestens einen Pumpe (P1, P2) Flüssigkeit im ersten Behälter (B1) und/oder im zweiten Behälter (B2) umwälzbar oder von einem der Behälter (B1, B2) in den anderen der Behälter (B2, B1) pumpbar ist.

2. Anordnung (1) nach Anspruch 1, umfassend eine erste Pumpe (P1) und eine zweite Pumpe (P2), wobei die erste Pumpe (P1) über eine Saugleitung (S1) und ein oder mehrere Absperrorgane (DKH1, DKH2, AO1) mit dem ersten Abgang (A1) des ersten Behälters (B1) verbunden oder verbindbar ist, wobei die erste Pumpe (P1) über eine Druckleitung (D1) und ein oder mehrere Absperrorgane (DKH3, AO2, AO3, AO4, AO7, AO8, AO9) wahlweise mit dem zweiten Abgang (A2) des ersten Behälters (B1) und/oder mit dem zweiten Abgang (A2) des zweiten Behälters (B2) verbunden oder verbindbar ist, derart, dass mittels der ersten Pumpe (P1) Flüssigkeit im ersten Behälter (B1) umwälzbar oder vom ersten Behälter (B1) in den zweiten Behälter (B2) pumpbar ist, wobei die zweite Pumpe (P2) über eine Saugleitung (S2) und ein oder mehrere Absperrorgane (DKH5, DKH8, AO6) mit dem ersten Abgang (A1) des zweiten Behälters (B2) verbunden oder verbindbar ist, wobei die zweite Pumpe (P2) über eine Druckleitung (D2) und ein oder mehrere Absperrorgane (DKH6, AO7, AO8, AO9, AO3, ACH) wahlweise mit dem zweiten Abgang (A2) des zweiten Behälters (B2) und/oder mit dem zweiten Abgang (A2) des ersten Behälters (B1) verbunden oder verbindbar ist, derart, dass mittels der zweiten Pumpe (P2) Flüssigkeit im zweiten Behälter (B2) umwälzbar oder vom zweiten Behälter (B2) in den ersten Behälter (B1) pumpbar ist,

3. Anordnung (1) nach einem der Ansprüche 1 oder 2, wobei der erste Abgang (A1) an einem tiefsten Punkt des jeweiligen Behälters (B1, B2) angeordnet ist.

4. Anordnung (1) nach einem der vorhergehenden Ansprüche, wobei ferner ein Absperrorgan (DKH9, AO5) vorgesehen ist, über das mit der mindestens einen Pumpe (P1, P2) Flüssigkeit aus dem ersten Behälter (B1) in einen Gärbehälter (G) pumpbar ist und/oder Flüssigkeit aus dem zweiten Behälter (B2) in einen Gärbehälter (G) pumpbar ist.

5. Anordnung (1) nach einem der vorhergehenden Ansprüche, wobei die Behälter (B1, B2) jeweils mit einem Temperaturfühler (TF) versehen und mittels einer Heizung (H) beheizbar sind.

6. Anordnung (1) nach einem der vorhergehenden Ansprüche, wobei eine elektronische Steuerung (ES) und/oder mindestens ein Thermostat (T) vorgesehen ist, die oder der zum Überwachen der Temperatur mittels der Temperaturfühler (TF) sowie zum Steuern und/oder Regeln der Heizung (H) und der Pumpen (P1, P2) ausgebildet ist.

7. Anordnung (1) nach einem der Ansprüche 4 bis 6, wobei ein Wärmetauscher (W) zum Kühlen von zum Gärtank (G) gepumpter Flüssigkeit vorgesehen ist.

8. Verfahren zum Bierbrauen unter Verwendung der Anordnung nach einem der vorhergehenden Ansprüche, wobei im ersten Behälter (B1, B2) gemaischt wird, während gleichzeitig im zweiten Behälter (B2, B1) Hopfenkochen erfolgt, wobei nach dem Hopfenkochen Würze aus dem zweiten Behälter (B2, B1) in einen Gärtank (G) gepumpt, der nunmehr leere zweite Behälter (B2, B1) gereinigt und ein Läutersieb (L) in den zweiten Behälter (B2, B1) eingesetzt wird, wobei anschließend Maische aus dem ersten Behälter (B1, B2) in den zweiten Behälter (B2, B1) gepumpt und dort geläutert wird, wobei anschließend beim Läutern entstehende Würze in den ersten Behälter (B1, B2) gepumpt und dort das Hopfenkochen durchgeführt wird, während der nunmehr leere zweite Behälter (B2, B1) gereinigt, das Läutersieb (L) entfernt und anschließend im zweiten Behälter (B2, B1) gemaischt wird.

9. Verfahren nach Anspruch 8, wobei das Verfahren alternierend zwischen dem ersten Behälter (B1) und dem zweiten Behälter (B2) einmal oder mehrmals wiederholt wird.

10. Verfahren nach Anspruch 8 oder 9, wobei die Maische während des Maischens mit einer dem jeweiligen Behälter (B1, B2) zugeordneten Pumpe (P1, P2) umgewälzt wird.

## Claims

1. Beer brewing arrangement (1) comprising at least a first vessel (B1) and a second vessel (B2), each vessel (B1, B2) having at least a first outlet (A1) underneath a seat for a removable lauter tun (L) and a second outlet (A2) above the seat for the lauter tun (L), each vessel (B1, B2) being heatable, the arrangement (1) also comprising at least one pump (P1, P2), which is connected or connectable selectively to the first outlet (A1) of the first vessel (B1) and/or to the first outlet (A1) of the second vessel (B2) via corresponding suction lines (S1, S2) and one or more shut-off members (DKH1, DKH2, DKH4, DKH5, DKH8, AO1, AO6), the at least one pump (P1, P2) being connected or connectable selectively to the second outlet (A2) of the first vessel (B1) and/or to the second outlet (A2) of the second vessel (B2) via corresponding pressure lines (D1, D2) and one or more shut-off members (DKH3, AO2, AO3, AO4, AO7, AO8, AO9), such that by means of the at least one pump (P1, P2) liquid is circulatable in the first vessel (B1) and/or in the second vessel (B2) or pumpable from one of the vessels (B1, B2) into the other of the vessels (B2, B1).

2. Arrangement (1) according to Claim 1, comprising a first pump (P1) and a second pump (P2), the first pump (P1) being connected or connectable to the first outlet (A1) of the first vessel (B1) via a suction line (S1) and one or more shut-off members (DKH1, DKH2, A01), the first pump (P1) being connected or connectable selectively to the second outlet (A2) of the first vessel (B 1) and/or to the second outlet (A2) of the second vessel (B2) via a pressure line (D1) and one or more shut-off members (DKH3, AO2, AO3, AO4, AO7, AO8, AO9), such that by means of the first pump (P1) liquid is circulatable in the first vessel (B1) or pumpable from the first vessel (B1) into the second vessel (B2), the second pump (P2) being connected or connectable to the first outlet (A1) of the second vessel (B2) via a suction line (S2) and one or more shut-off members (DKH5, DKH8, AO6), the second pump (P2) being connected or connectable selectively to the second outlet (A2) of the second vessel (B2) and/or to the second outlet (A2) of the first vessel (B1) via a pressure line (D2) and one or more shut-off members (DKH6, AO7, AO8, AO9, AO3, AO4), such that by means of the second pump (P2) liquid is circulatable in the second vessel (B2) or pumpable from the second vessel (B2) into the first vessel (B1).

3. Arrangement (1) according to either of Claims 1 and 2, the first outlet (A1) being arranged at the deepest point of the respective vessel (B 1, B2).

4. Arrangement (1) according to one of the preceding claims, a shut-off member (DKH9, AO5) also being provided, via which liquid is pumpable from the first vessel (B1) into a fermentation tank (G) and/or liquid is pumpable from the second vessel (B2) into a fermentation tank (G) by means of the at least one pump (P1, P2).

5. Arrangement (1) according to one of the preceding claims, the vessels (B1, B2) each being provided with a temperature sensor (TF) and heatable by means of a heater (H).

6. Arrangement (1) according to one of the preceding claims, an electronic controller (ES) and/or at least one thermostat (T) being provided, which is designed to monitor the temperature by means of the temperature sensor (TF) and to open-loop and/or closed-loop control the heater (H) and the pumps (P1, P2).

7. Arrangement (1) according to one of Claims 4 to 6, a heat exchanger (W) for cooling liquid pumped to the fermentation tank (G) being provided.

8. Method for brewing beer using the arrangement according to one of the preceding claims, mashing being carried out in the first vessel (B1, B2), while at the same time hops are boiled in the second vessel (B2, B1), and, after the hops have been boiled, wort is pumped from the second vessel (B2, B1) into a fermentation tank (G), the now empty second vessel (B2, B1) is cleaned and a lauter tun (L) is inserted into the second vessel (B2, B 1), mash then being pumped from the first vessel (B1, B2) into the second vessel (B2, B1) and lautered there, and wort produced during the lautering operation then being pumped into the first vessel (B1, B2) and the hops being boiled there, while the now empty second vessel (B2, B1) is cleaned, the lauter tun (L) is removed and then mashing is carried out in the second vessel (B2, B1).

9. Method according to Claim 8, the method being repeated once or multiple times alternately between the first vessel (B 1) and the second vessel (B2).

10. Method according to Claim 8 or 9, the mash being circulated during the mashing operation by means of a pump (P1, P2) assigned to the respective vessel (B1, B2).

## Revendications

1. Agencement (1) pour le brassage de la bière, comprenant au moins un premier récipient (B1) et un deuxième récipient (B2), chaque récipient (B1, B2) présentant au moins une première sortie (A1) en dessous d'un siège pour un tamis de clarification amovible (L) et une deuxième sortie (A2) au-dessus du siège pour le tamis de clarification (L), chaque récipient (B1, B2) étant conçu pour pouvoir être chauffé, l'agencement (1) comprenant en outre au moins une pompe (P1, P2) qui est reliée ou peut être reliée par l'intermédiaire de conduites d'aspiration correspondantes (S1, S2) et d'un ou plusieurs organes d'arrêt (DKH1, DKH2, DKH4, DKH5, DKH8, AO1, AO6) au choix à la première sortie (Al) du premier récipient (B1) et/ou à la première sortie (A1) du deuxième récipient (B2), l'au moins une pompe (P1, P2) étant reliée ou pouvant être reliée par l'intermédiaire de conduites de refoulement correspondantes (D1, D2) et d'un ou plusieurs organes d'arrêt (DKH3, AO2, AO3, AO4, AO7, AO8, AO9) au choix à la deuxième sortie (A2) du premier récipient (B 1) et/ou à la deuxième sortie (A2) du deuxième récipient (B2), de telle sorte qu'au moyen de l'au moins une pompe (P1, P2), du liquide peut être mis en circulation dans le premier récipient (B1) et/ou dans le deuxième récipient (B2) ou peut être pompé de l'un des récipients (B1, B2) dans l'autre des récipients (B2, B1).

2. Agencement (1) selon la revendication 1, comprenant une première pompe (P1) et une deuxième pompe (P2), la première pompe (P1) étant reliée ou pouvant être reliée par l'intermédiaire d'une conduite d'aspiration (S1) et d'un ou plusieurs organes d'arrêt (DKH1, DKH2, AO1) à la première sortie (A1) du premier récipient (B1), la première pompe (P1) étant reliée ou pouvant être reliée par l'intermédiaire d'une conduite de refoulement (D1) et d'un ou plusieurs organes d'arrêt (DKH3, AO2, AO3, AO4, AO7, AO8, AO9) au choix à la deuxième sortie (A2) du premier récipient (B1) et/ou à la deuxième sortie (A2) du deuxième récipient (B2), de telle sorte qu'au moyen de la première pompe (P1), du liquide peut être mis en circulation dans le premier récipient (B1) ou peut être pompé du premier récipient (B1) dans le deuxième récipient (B2), la deuxième pompe (P2) étant reliée ou pouvant être reliée par l'intermédiaire d'une conduite d'aspiration (S2) et d'un ou plusieurs organes d'arrêt (DKH5, DKH8, AO6) à la première sortie (A1) du deuxième récipient (B2), la deuxième pompe (P2) étant reliée ou pouvant être reliée par l'intermédiaire d'une conduite de refoulement (D2) et d'un ou plusieurs organes d'arrêt (DKH6, AO7, AO8, AO9, AO3, AO4) au choix à la deuxième sortie (A2) du deuxième récipient (B2) et/ou à la deuxième sortie (A2) du premier récipient (B 1), de telle sorte qu'au moyen de la deuxième pompe (P2), du liquide peut être mis en circulation dans le deuxième récipient (B2) ou pompé du deuxième récipient (B2) dans le premier récipient (B1).

3. Agencement (1) selon l'une quelconque des revendications 1 ou 2, dans lequel la première sortie (A1) est agencée à un point le plus bas du récipient respectif (B1, B2).

4. Agencement (1) selon l'une quelconque des revendications précédentes, dans lequel il est en outre prévu un organe d'arrêt (DKH9, AO5) par l'intermédiaire duquel du liquide peut être pompé par l'au moins une pompe (P1, P2) depuis le premier récipient (B 1) vers un récipient de fermentation (G) et/ou du liquide peut être pompé depuis le deuxième récipient (B2) vers un récipient de fermentation (G).

5. Agencement (1) selon l'une quelconque des revendications précédentes, dans lequel les récipients (B1, B2) sont chacun pourvus d'une sonde de température (TF) et peuvent être chauffés au moyen d'un chauffage (H).

6. Agencement (1) selon l'une quelconque des revendications précédentes, dans lequel il est prévu une commande électronique (ES) et/ou au moins un thermostat (T) qui est configuré(e) pour surveiller la température au moyen des sondes de température (TF) et pour commander et/ou réguler le chauffage (H) et les pompes (P1, P2).

7. Agencement (1) selon l'une quelconque des revendications 4 à 6, dans lequel un échangeur de chaleur (W) est prévu pour refroidir le liquide pompé vers la cuve de fermentation (G).

8. Procédé de brassage de la bière utilisant l'agencement selon l'une quelconque des revendications précédentes, dans lequel le brassage est effectué dans le premier récipient (B1, B2) pendant que le houblonnage est effectué simultanément dans le deuxième récipient (B2, B1), dans lequel, après le houblonnage, le moût est pompé du deuxième récipient (B2, B1) vers une cuve de fermentation (G), le deuxième récipient (B2, B 1) maintenant vide est nettoyé et un tamis de clarification (L) est inséré dans le deuxième récipient (B2, B1), dans lequel le produit brassé est ensuite pompé du premier récipient (B1, B2) dans le deuxième récipient (B2, B1) et y est clarifié, dans lequel le moût produit lors de la clarification est ensuite pompé dans le premier récipient (B1, B2) et le houblonnage y est réalisé, tandis que le deuxième récipient (B2, B1) maintenant vide est nettoyé, le tamis de clarification (L) est retiré et le brassage est ensuite effectué dans le deuxième récipient (B2, B1).

9. Procédé selon la revendication 8, dans lequel le procédé est répété une ou plusieurs fois en alternance entre le premier récipient (B1) et le deuxième récipient (B2).

10. Procédé selon la revendication 8 ou 9, dans lequel le produit brassé est mis en circulation pendant le brassage avec une pompe (P1, P2) associée au récipient respectif (B1, B2).
